Europäisches Patentamt

European Patent Office

Office européen des brevets

(11) Veröffentlichungsnummer: **0 341 492 B1**

## (12) EUROPÄISCHE PATENTSCHRIFT

(45) Veröffentlichungstag der Patentschrift: **23.06.93**

(21) Anmeldenummer: **89107535.0**

(22) Anmeldetag: **26.04.89**

(51) Int. Cl.5: **H01M 4/04**, H01M 4/26, H01M 4/62, H01M 4/52

(54) Verfahren zum Vibrationsfüllen von Schaum- oder Faserstrukturelektrodengerüsten für galvanische Zellen.

(30) Priorität: **11.05.88 DE 3816232**

(43) Veröffentlichungstag der Anmeldung:
**15.11.89 Patentblatt 89/46**

(45) Bekanntmachung des Hinweises auf die Patenterteilung:
**23.06.93 Patentblatt 93/25**

(84) Benannte Vertragsstaaten:
**ES FR GB SE**

(56) Entgegenhaltungen:
**US-A- 2 766 721**

**PATENT ABSTRACTS OF JAPAN, Band 7, Nr. 204 (E-197)[1349], 9. September 1983; & JP-A-58 102 463 (SANYO DENKI K.K.) 18-06-1983**

**PATENT ABSTRACTS OF JAPAN, Band 11, Nr. 92 (E-491)[2539], 24. März 1987; & JP-A-61 243 655 (SHIN KOBE ELECTRIC MACH CO. LTD) 29-10-1986**

**PATENT ABSTRACTS OF JAPAN, Band 9, Nr. 49 (E-300)[1772], 2. März 1985; & JP-A-59 191 263 (SANYO DENKI K.K.) 30-10-1984**

(73) Patentinhaber: **DEUTSCHE AUTOMOBILGE-SELLSCHAFT MBH**
**Podbielski Strasse 293**
**W-3000 Hannover(DE)**

(72) Erfinder: **von Benda, Klaus, Dr.**
**U. v. Ensingen Strasse 3**
**W-7440 Nürtingen(DE)**
Erfinder: **Benczùr-Ürmösy, Gábor, Dr.**
**Nachtigallenweg 10 B**
**W-7000 Stuttgart 1(DE)**

**Beschreibung**

Die Erfindung betrifft ein Verfahren zum Vibrationsfüllen von Schaum- oder Faserstrukturelektrodengerüsten, die mit einer Stromableiterfahne versehen sind, für galvanische Zellen, insbesondere für elektrische Akkumulatoren, mit einer thixotropen Aktivmassepaste und die Aktivmassenpaste dazu.

Elektrodengerüste mit Schaum- oder Faserstruktur finden zunehmende Verbreitung, da sie gegenüber den billigen Guß- und Streckgittern hinsichtlich Strombelastbarkeit und Lebensdauer Vorteile bieten. Die Fasern dieser Gerüste können vollständig aus Metall bestehen, z.B. aus vernickelter Stahlwolle, oder sie können durch Metallisieren von Kunststoff-Faservliesen, z.B. nach der US-PS 3 560 262, gebildet werden.

Schaumstrukturgerüste, die oft auch als retikulierte Gerüste bezeichnet werden, lassen sich durch Metallisieren von offenzelligen Schäumen, z.B. von karbonisierten Schäumen gemäß der GB-PS 1 211 428, von Schäumen vor der Pyrolyse gemäß der DE-OS 24 27 422 oder durch Verschäumen einer metallpulverhaltigen Kunststoffmasse und anschließender Pyrolyse gemäß der EP-PS 0 087 160 herstellen. Die Poren dieser retikulierten Gerüste bilden herstellungsbedingt Polyeder von annähernder Kugelform und variieren in Form und Größe weit weniger, als die Poren von aus Wirrfaserfliesen (Nonwovens) bestehenden Gerüsten. Der Porendurchmesser der retikulierten Gerüste ist aufgrund der verfahrenstechnisch bedingten Gasblasengrößen viel größer als der von pulvermetallurgisch erzeugten Sintergerüsten und es wird daher im Allgemeinen eine erhebliche Dickenreduktion der retikulierten Gerüste durch Walzen oder Pressen vorgenommen. Aus den retikulierten Gerüsten wird der Kunststoffanteil fast immer durch Pyrolyse entfernt, so daß sich im Endeffekt Ganzmetallgerüste ohne Kunststoffanteil ergeben.

Nach den Porengrößen und Porenformen läßt sich folgende Einteilung der Elektrodengerüste treffen:

a) Sehr große Poren im Millimeterbereich in Form bi-dimensional regelmäßig angeordneter Löcher: Gußgitter, Streckgitter und Netze.

b) Große Poren, Kugelform durch Polyeder angenähert, Poren dreidimensional vernetzt, enge Porengrößenverteilung: retikulierte (Schaum-)Gerüste.

c) Mittelgroße Poren, anisodimensional (sehr unterschiedliche Abmessungen einer Pore in verschiedenen Raumrichtungen), Porenbegrenzung durch teilweise langgestreckte (elongierte) Stege, dreidimensionale Vernetzung der Poren: Fasergerüste und verdichtete (komprimierte) Schäume.

d) Kleine Poren, dreidimensional vernetzt, Porenbegrenzung durch Sinterhälse, ca. 60% des gesamten Porenvolumens liegen in Form von Poren im Bereich 4 bis 15 Mikrometer vor (Falk & Salkind, Alkaline Storage Batteries, Verlag J. Wiley 1969, S. 122): pulvermetallurgische Sintergerüste.

Für das Einbringen der Aktivmasse, das Füllen oder Imprägnieren, haben sich unterschiedliche Techniken entwickelt, die sich an den oben aufgeführten Porencharakteristika orientieren.

Die Füllung der unter a) genannten, mit zweidimensionalen, optisch durchsichtigen Lochmustern versehenen Gerüste geschieht gewöhnlich durch mechanisches Einpressen einer Aktivmassenpaste, so bei den Elektroden von Bleiakkumulatoren, bei denen diese Technik für Gußgitter und Streckgitter angewendet wird. Als druckgebende Organe dienen Walzen oder Rakel. Da die Masse einerseits fest genug sein muß, um nach dem Pastieren nicht aus den Löchern zu fließen, andererseits aber plastisch genug sein muß, um noch streichbar zu sein, verwendet man hochviskose thixotrope Pasten (z.B. DE-PS 25 17 368 oder DE-PS 26 02 904), die unter dem Druck der Walze oder des Rakels hinreichend flüssig werden.

Für engporige Gerüste mit dreidimensionalem Netzwerk von Poren wird dieses Verfahren umso schwieriger, je enger die Poren sind. Für Sintergerüstplatten haben sich daher nur chemische oder elektrochemische Fällungsverfahren zur Einlagerung der Aktivmassen durchsetzen können, da die Lösungen selbst in sehr kleine Poren eindringen können. Die mit Lösungen operierenden Verfahren leiden aber unter den Nachteilen der Langwierigkeit, der begleitenden Gerüstkorrosion sowie der Verunreinigung der Fällungsprodukte durch Anionen der Ausgangsverbindung; typisch sind z.B. Nitrat-, Sulfat- oder Chloridionen. Die Langwierigkeit der Füllung ist durch die in Lösungen gegenüber Feststoffen prinzipiell viel kleinere Ionenkonzentration gegeben, so daß der Aufbau der gewünschten hohen Feststoffkonzentration der Aktivmasse im Porenvolumen der Elektrode viel Zeit erfordert.

Für die unter b) und c) genannten Schaum- und Faserstrukturgerüste sind sowohl die für d) bekannten Fällungsimprägnierungen wie auch mechanische Füllverfahren mit Suspensionen und Pasten beschrieben worden. Die kostengünstigeren mechanischen Verfahren treffen hier natürlich auf eine mit Sinken der Poren zunehmende Schwierigkeit der Realisierung, da Feststoffsuspensionen und Pasten nicht so problemlos in ein Netzwerk feiner Poren dringen wie Lösungen.

Für retikulierte Gerüste mit großen Poren zwischen 230 und 2540 Mikrometer wird in der DE-PS 15 96 023 (= US-PS 3 287 164) eine Füllung mit Aktivmassenpaste unter Rütteln beschrieben. Die Trägerflüssigkeit ist 30%ige Kalilauge. Über die Viskosität der Paste und die Rüttelbedingungen (Frequenz, Intensität, Anordnung) werden keine Angaben gemacht. Die Füllung so großer Poren ist jedoch unproblematisch.

Die Füllung eines mit 100 bis 500 Mikrometer Porendurchmesser etwa engeren Schaumgerüste ohne Metallisierung wird in der DE-AS 11 08 759 in ähnlicher Knappheit beschrieben. Danach wird eine "aufgeschlämmte aktive Masse" eingepreßt, "gegebenenfalls unter Rütteln". Nach der Formulierung "aufgeschlämmte aktive Masse" kann es sich jedoch nicht um eine Paste handeln.

Eine Apparatur für die Pastenimprägnierung retikulierter Gerüste (Schaummetall), ebenfalls ohne Porengrößenangabe, beschreibt die US-PS 4 217 939. Das Gerüst wird horizontal auf einer Lochplatte über einen Pastenbehälter geführt, in welchem die Paste durch Rührer bewegt und aufwärts in und um das Gerüst gedrückt wird, während von oben Paste durch hin- und hergehende Rakel in das Gerüst gestrichen wird. Es gelingt dabei jedoch nicht ohne weiteres, die Luft aus den Poren des Gerüstes durch die Paste zu verdrängen. Dazu ist vielmehr eine Vorimprägnierung des Gerüstes mit Wasser erforderlich. Durch die Verdünnung der Paste mit diesem Wasser kommt es zu Schwierigkeiten mit der Konzentrationseinstellung der Paste.

Die Pastenfüllung von Fasergerüstelektroden wird in mehreren Anmeldungen beschrieben. In der US-PS 3 262 815 (= GB 11 09 524) werden drei verschiedene Methoden angegeben eine Aufschlämmung eines Aktivmassenmaterials in ein Fasergerüst zu bringen: 1.) Mechanisches Einarbeiten, 2.) Tiefenfiltration und 3.) Einbringen des Gerüstes in ein mechanisch bewegtes (agitated) Bad, wobei man das Gerüst oder das Bad in Bewegung setzen kann. Keiner dieser drei Methoden arbeitet nach den Angaben dieses US-Patentes für sich allein zufriedenstellend, da in der Schrift ein Verfahren angestrebt wird, das alle drei Methoden kombinieren soll: So soll da Gerüst nach der Behandlung 3.) noch eine Nachbehandlung 2.) und 1.) erfahren. Über die mechanischen Eigenschaften der Paste werden keine Angaben gemacht; die Behandlung gemäß 3.) liefert jedoch offensichtlich allein keine keine zufriedenstellende Füllung.

So wird denn auch in der späteren Anmeldung DE-OS 24 36 704 desselben Anmelders wieder auf das Grundrezept des Einarbeitens einer thixotropen Paste durch Druckwalzenauftrag zurückgegriffen, wie das weiter oben für Bleigitter bereits beschrieben wurde; nur daß die Methode hier auf Nickelfasergerüste von 92 % Porosität und 1,7 mm Dicke (Beispiel 1) angewendet wurde. Nach dem Füllen wurden diese Gerüste auf 0,9 mm Dicke verdichtet. Diese starke Kompression, die die Porosität von 92 % auf 85 % reduziert, deutet darauf hin, daß eine Pastenfüllung in das fertige Gerüst endgültiger Dicke offensichtlich nicht gelingt, wird doch schon für das noch offene unverdichtete Gerüst ein zweimaliger Pastenauftrag benötigt.

In der US-PS 2 766 721 wird eine Vorrichtung für das Einbringen einer thixotropen Paste in ein Gewebe angegeben, wobei das thixotrope Material in einem Vorratsgefäß mittels Rühren verflüssigt und auf das Gewebe aufgebracht wird und zusätzlich Rühreinrichtungen vorhanden sind, die das thixotrope Material flüssig halten.

Die Anmeldungen DE-OS 24 27 421 (= US-PS 3 877 987) und DE-OS 24 27 422 (= US-PS 3 926 671) erwähnen in gleichlautenden Texten die Füllmöglichkeit von Fasergerüsten mit Aktivmassensuspensionen, die gießfähig und damit sehr dünnflüssig sind. Die Suspension wird auf das waagerecht gelagerte Gerüst aufgegossen und eine Parallel zum Gerüst angeordnete Vibratorelektrode, die mit einem Ultraschallgenerator in Verbindung steht, sorgt in Kombination mit Unterdruck für eine "weitgehende" Füllung, die jedoch noch durch eine nachgeschaltete Fällungsimprägnierung vervollständigt werden muß. Gemäß den Beschreibungen in diesen Anmeldungen handelt es sich bei den Aktivmassensuspensionen nicht um Pasten; der Ausdruck Paste wird auch nicht benutzt.

Die vorstehend besprochenen Schriften beziehen sich auf Gerüste, die unter eine bestimmte Gattung a) bis c) der o.g. Gerüstklassifikation gemäß der Porenweite einzuordnen sind.

Es ist ferner durch die DE-AS 12 87 663 eine Vibrationsfüllung mit Pasten unter Einwirkung von Ultraschallschwingungen und ggf. von Vakuum bekannt geworden, die sowohl für Faserplatten (c) als auch für pulvermetallurgisch erzeugte Sinterplatten (d) verwendbar sein soll. Bei diesem Füllverfahren wird die Paste in dünner, gleichmäßiger Schicht auf den Ultraschallschwinger aufgebracht und durch einen Andruckkörper wird die Pastenschicht zusammen mit dem Gerüst kräftig gegen den Schwinger gedrückt, wobei eine perforierte Folie zwischen Elektrodengerüst und Andruckkörper gelegt wird. Über die Fließeigenschaften der Paste werden keine näheren Angaben gemacht, bis auf das Beispiel, gemäß dem die Paste eine Konsistenz wie etwa streichfähige Butter haben soll.

Die waagerechte Lagerung des Gerüstes, die bei allen Füllvorgängen unter der Einwirkung von Schwingungen zur Anwendung kommt, wird deswegen für unumgänglich gehalten, weil im Schwingungsfeld die dispergierte Substanz bestrebt ist, sich nach unten abzusetzen, während die Trägerflüssigkeit sich nach oben hin bewegt (DE-AS 12 87 663). Mit der waagerechten Lagerung sind jedoch erhebliche Nachteile verbunden. So ist es bekannt, daß das gefüllte Gerüst sehr fest an der Andruckplatte oder der Oberfläche des Schwingers ankleben kann, was dazu geführt hat, daß besondere Entnahmetechniken vorgeschlagen werden (z.B. in der DE-PS 12 10 417) oder daß man die entsprechenden anbackungsgefährdeten Teile mit einer Antihaftbeschichtung oder einer Antihaftfolie versieht. Darüber hinaus ist natürlich auch das Herstellungsverfahren als solches, bei dem das zufüllende Gerüst waagerecht zwischen Zwei Schichten der aktiven Masse eingebettet und dann unter Druck und der Einwirkungen von Schwingungen gefüllt wird, außerordentlich umständlich. Zusammenfassend kann gesagt werden, daß bei der Verwendung von gießbaren Aufschlemmungen oder Suspensionen, wie sie z.B. in der DE-AS 11 08 759, DE-OS 24 27 421, US-PS 3 262 815, US-PS 3 877 987 oder US-PS 3 926 671 beschrieben werden, ein einzelner Füllvorgang keine ausreichende Füllung bewirkt, so daß mehrere Imprägnierdurchgänge bzw. nachgeschaltete Imprägnierungen empfohlen werden.

Bei der Verwendung feststoffreicher Pasten - wobei man unter Pasten gemäß Römpp Chemielexikon, 8. Auflage 1985, Band 4, Seite 3006, Festkörperdispersionen in Flüssigkeit von teigiger Konsistenz, also nicht etwa gießbare Aufschlämmungen versteht - ergeben sich die wie weiter oben geschilderten aus der US-PS 4 217 939 und der DE-AS 12 87 663 bekannten Schwierigkeiten.

Aus "Alkaline storage batteries" von Falk und Salkind (Wiley 1969) sind ferner Sintergerüste aus gesinterten Carbonyl-Nickel-Puder mit einem mittlere Porendurchmesser von 4 bis 15 μm zu entnehmen.

Die Aufgabe der Erfindung besteht darin, ein Verfahren zum Vibrationsfüllen von Schaum- oder Faserstrukturelektrodengerüsten, die mit einer Stromableiterfahne ausgestattet sind, mit einer thixotropen Aktivmassenpaste zu finden, das einfach, schnell und ohne großen apparativen oder sonstigen Aufwand durchzuführen ist, und eine Paste dazu.

Die gestellt Aufgabe wird erfindungsgemäß für das Verfahren mit den kennzeichnenden Merkmalen des 1. Patentanspruches und für die Paste mit den kennzeichnenden Merkmalen des Patentanspruches 10 gelöst.

Die zu füllenden Elektrodengerüste werden in einen mit Aktivmassenpaste gefüllten Behälter getaucht, in dem die Aktivmassenpaste in Schwingungen versetzt ist. Die in dem Behälter befindliche Aktivmassenpaste besitzt einen Aktivmassenanteil von 25 bis 60 Vol.-% mit einer maximalen Korngröße der aktiven Partikel von 0,04 mm, sowie eine Fließgrenze von 10 bis 120 Pa bei 20°C und eine plastische Viskosität von 0,1 bis 1 Pa.a bei 20°C. Die Viskositätsangaben beziehen sich dabei selbstverständlich auf eine Paste, die sich in nicht erregtem Zustand befindet, d.h. die nicht in Schwingungen versetzt ist.

Konzentrierte Suspensionen gehören zu den plastischen Stoffen, d.h. sie haben eine Fließgrenze. Als Fließgrenze wird die Mindestkraft pro Flächeneinheit (Schubspannung, Tangentialspannung) bezeichnet, die notwendig ist, um überhaupt einen Fließvorgang hervor zu rufen. Zur Erläuterung der rheologischen Begriffe und Meßverfahren sie auf die Schrift "Messung rheologischer Eigenschaften", Bulletin T 990 D-7309, Contraves AG Zürich, Seite 16 bis 20 und auf die Veröffentlichung von A. Finke und W. Heinz "Zur Bestimmung der Fließgrenze grobdisperser Systeme", Rheologica Acta, 1 (1961), Seite 530 bis 538, hingewiesen. Die rheometrische Verifizierung der Pasteneigenschaften läßt sich nach den oben angegebenen Literaturstellen mit einem Viskosimeter vornehmen. Bei der Anmelderin hat sich das Rotationsviskosimeter Rotovisco RV 12 (Fa. Haake) mit den Meßeinrichtungen NV und MVI bewährt. Es sollen Schergeschwindigkeiten von mindestens 100/s erreicht werden. Zur Auswertung ist die Rücklaufkurve zu empfehlen und es ist auf gute Thermostatisierung zu achten. Für die Messung der maximalen Korngröße genügt ein sogenanntes Grindometer, bei dem ein Patenausstrich abnehmender Dicke beurteilt wird.

Die Viskosität der Paste läßt sich nicht nur durch die Menge und die Korngröße der aktiven Masse beeinflussen, sondern läßt sich auch noch durch Zugabe von anderen Substanzen modifizieren. Dem Fachmann wohlbekannt ist z.B. der Zusatz von Netzmitteln (z.B. DE-AS 11 08 759), Dispersionsmitteln (z.B. DE-OS 24 36 704), Spreizmitteln (z.B. DE-AS 12 87 663), Expandern (z.B. DE-PS 25 17 368, DE-PS 26 02 904), Verdickungsmitteln (z.B. DE-OS 24 36 704, US-PS 4 217 939), aber auch Ruß (z.B. US-PS 32 62 815), wobei ein Zusatz eines Dispergators aus der Gruppe der wasserlöslichen Salze des Polyphosphorsäure mit erfindungswesentlich ist.

Die Korngröße der Partikel der Aktivmassenpaste soll 0,04 mm nicht überschreiten, da es ansonsten bei feinen Poren Schwierigkeiten mit der Füllung geben kann. Die Paste kann aus allen gängigen Aktivmassenmaterialien erzeugt werden, die bekannt sind, sofern sie nicht Reaktionen mit der Dispersionsflüssigkeit eingehen.

Die zu füllenden Elektrodengerüste werden, im allgemeinen an ihrer Stromableiterfahne hängend, horizontal oder vertikal in den mit einer in Schwingungen versetzten Aktivmassenpaste gefüllten Behälter getaucht und nach dem Füllen ebenso einfach wieder aus ihm herausgezogen. Allein die Möglichkeit das Gerüst durch einfaches Einhängen in die Aktivmassenpaste vollständig füllen zu können, stellt schon eine ganz bedeutende Verfahrensvereinfachung gegenüber den bisher bekannten Verfahren dar.

Um die Aktivmassenpaste in die Poren der Gerüste eindringen zu lassen, wird die Aktivmassenpaste in Schwingungen versetzt. Dabei ist man nicht auf den Ultraschallbereich beschränkt, es können vorteilhaft auch mechanische Rüttler eingesetzt werden, die preiswert höhere Leistungen abgeben. Bewährt hat sich der Frequenzbereich von 40 bis etwa 125 Hz, da sich diese letzteren Schwingungen besonders günstig aus den üblicherweise verwendeten Netzfrequenzen ableiten lassen. Der Rüttler soll bevorzugt im Beschleunigungsbereich von 1 bis 15 g betrieben werden. Beschleunigung gb (in g) und Frequenz f sowie Amplitude A sind durch die Beziehung $b_g = 4 \pi 2_f 2_A$ verknüpft.

Bei dem erfindungsgemäßen Verfahren gestaltet sich die Vorrichtung zur Durchführung der Imprägnierung sehr einfach. Man füllt die Aktivmassenpaste in einen Behälter und taucht das zu füllende Gerüst in die in Schwingungen versetzte, verflüssigte Paste. Zur Einbringung der Schwingungen in die Paste wird das Gefäß oder das zu füllende Gerüst in Schwingungen versetzt, d.h. gerüttelt. Bei großen Pastenmengen, wie sie in einer Produktion eingesetzt werden müssen, ergeben sich allerdings Probleme mit dem Rütteln entsprechend großer Behälter. In diesem Fall kann die Schwingung durch Übertrager, die sich im Innern des Behälters befinden, auf die Paste übertragen werden. Üblicherweise bestehen diese Übertrager aus einer Platte, die von einem außerhalb des Pastenbades angeordneten Erreger angetrieben wird. Besonders günstig ist es, einen Schwingungsübertrager zu verwenden, der aus einem stirnseitig offenen, das Elektrodengerüst vollständig und mindestens seitlich berührungsfrei aufnehmenden U-Profil besteht. Die Seiten dieses U-Bleches sind etwa so hoch wie das zu füllende Gerüst, das von oben eingeführt wird und dessen Unterkante am Bodenteil des U-Profils eine Abstützung finden kann, so daß die Eintauchtiefe des Gerüstes definiert ist. Dies kann vorteilhaft sein, wenn man eine Verunreinigung der Elektrodenfahne mit der Paste vermeiden will. Die Amplitude, mit der der Behälter, das zu füllende Gerüst, oder der Schwingungsübertrager schwingen, soll etwa zwischen 0,1 bis 1,5 mm liegen. Größere Amplituden führen im allgemeinen zu keiner besseren Wirkung, kleinere Amplituden bedingen mitunter längere Imprägnierungszeiten. Als optische Hilfe für die richtige Einstellung von Frequenz und Amplitude kann die Ausbildung stehender Wellen an der Oberfläche des Pastenbades dienen. Die Richtung, mit der die Schwingungen in das Pastenbad eingeleitet werden, ist in dem Verfahren nicht kritisch. Es wird jedoch bevorzugt, die Schwingungen so einzuleiten, daß die Wellenfront senkrecht auf das zu füllende Gerüst auftrifft. In diesem Falle ist die beste Ausnutzung der Wellenenergie gegeben. Erreicht wird dies am einfachsten dadurch, daß man den Schwingungsübertrager, wie bereits aus dem zitierten Stand der Technik an sich bekannt, parallel zu dem zu füllenden Gerüst anordnet.

Im Verlauf des Verfahrens werden unter dauernder Vibration die leeren Gerüste einzeln oder gruppenweise gleichzeitig in das Pastenbad getaucht. Unter Austritt von Luft füllen sich die Gerüste weitgehend nach 10 bis 30 Sekunden. Die Verweildauer kann bis zu 2 bis 3 Minuten noch mit Zugewinn an Pastenfüllung verlängert werden. Nach dem Herausziehen der Gerüste aus dem Bad wird der Überschuß an Paste durch Gummilippenpaare abgestreift, die oberhalb des Pastenbades angeordnet sind. Eine Reinigung durch Bürsten ist ebenfalls möglich.

Das Verfahren ermöglicht es große Mengen an Elektrodengerüsten schnell und ohne großen Aufwand zu füllen. Überraschend dabei ist, daß im Gegensatz zu der in der Literatur geäußerten Meinung keine Entmischung des Pastenbades durch die Anwendung der Schwingungen auftritt.

Beispiel 1:

480 g Zinkoxidpulver wurden mit 128 ml Wasser, das 0,2 % eines Dispergiermittels auf der Basis eines Natriumsalzes einer Polykarbonsäure mäßig hohen Polymerationsgrades (Tamol ® PA, Hersteller BASF) sowie 2 % Natriumtriphosphat enthielt, vier Stunden lang in einer Kugelmühle gemischt. Die Fließkurve der erhaltenen Paste wurde mit einem Rotationsviskosimeter (Rotovisco der Fa. Haake mit der Meßeinrichtung NV) gemessen. Sie zeigte das typische Bild eines ideal plastischen, sogenannten Bingham-Körpers. Die Fließkurve der Paste war durch die Fließgrenze von 24 Pa und durch die plastische Viskosität von 230 mPa.s vollständig beschrieben. Die Paste enthielt 40 Vol.-% Zinkoxid..

Als Elektrodengerüst wurde eine 2 mm dicke Kupferschaumplatte mit einer Porosität von 92 % bei 100 μm mittlerer Porengröße benutzt. Die Paste wurde in ein prismatisches Gefäß gegeben, das auf einem elektromagnetisch angetriebenen Rüttler (shaker) befestigt war. Die Paste wurde durch Vibration mit 50 Hz und 0,5 mm Amplitude in Schwingung versetzt und verflüssigt. Der flüssige Zustand war an der Ausbildung stehender Wellen an der Oberfläche der Suspension erkennbar. Das Kupferschaumgerüst wurde vertikal in die Suspension eingetaucht. Dabei wurde das Austreten von Luftblasen beobachtet. Eine Minute nach dem Eintauchen wurde die Platte entnommen, durch Abbürsten von anhaftendem überschüssigen Material gereinigt und gewogen. Die Auswertung ergab, daß 98 % des Porenvolumens mit Paste gefüllt war.

Beispiel 2:

405 g Nickelhydroxidpulver und 12,5 g Kobaltpulver wurden mit 182 g einer 5%igen wässrigen Natriumpolyphosphatlösung in einer Porzellankugelmühle von 1 l Inhalt mit Hilfe von 540 g Aluminiumoxid-Mahlkugeln von 16 mm Durchmesser mit 70 Umdrehungen/min 16 Stunden lang vermahlen. Die so erhaltene Paste besaß eine Fließgrenze von 105 Pa und eine plastische Viskosität von 300 mPa.s. Die mit dem Grindometer gemessene maximale Korngröße betrug 23 $\mu$m. Die Paste besaß einen Aktivmassenanteil von 36,7 $\mu$m Vol.-% Nickelhydroxid und 0,5 Vol.-% Kobalt. Die Paste wurde nach Trennung von den Mahlkugeln in ein Stahlgefäß überführt, das auf einem Rütteltisch befestigt war. Die in die Paste eingebrachte Schwingungsenergie wurde so eingestellt, daß das Spritzen der Paste an der Oberfläche gerade noch nicht auftrat, was bei einer Frequenz von 40 Hz bei einer Amplitude von 1,25 mm der Fall war. Die zu füllende Elektrodenplatte bestand aus einem 4 mm dikken vernickelten Fasergerüst aus Polypropylenvlies mit einer Porosität von 85 %. Die rechnerisch aus Faserdurchmesser und Gewicht der unvernickelten und der vernickelten Probe ermittelte Durchschnittsporengröße lag bei 78 $\mu$m. Die Gerüstplatte wurde an der angeschweißten Fahne gehaltert und blieb eine Minute untergetaucht in der fluidisierten Paste. Beim Herausziehen wurde die Platte zwischen Gummilippen geführt, die den noch nicht erstarrten Pastenüberschuß abstreiften. Dank der eingestellten Viskosität floß die Paste aus den gefüllten Poren der Platte nicht heraus. Aus den Gewichten der leeren und der gefüllten Platte sowie aus dem Trockengewicht nach Trocknung bei 80°C ergab sich eine Füllung von 96 % des Porenvolumens und ein Aktivmassenanteil von 1,4 g/ml Porenvolumen. Aus mehreren hintereinander erfolgten Imprägnierversuchen und aus der Bestimmung des Wassergehalts der Paste ergab sich keine Konzentrationsverschiebung bzw. Verschiebung des Wasser- oder Feststoffgehalts der Paste über die Versuchsdauer.

Beispiel 3:

600 g Eisen(III)-Oxid (Bayferrox ® 1370, Hersteller Bayer AG) und 121,8 g einer 2%igen wässrigen Natriumpolyphosphatlösung (Calgon ® 322, Hersteller Benckiser-Knapsack), die noch zusätzlich 1,5 Gew.-% Polyvinylalkohol enthielt, wurden in einem Labormischer 30 Minuten lang gemischt. Der Aktivmassenanteil in der so hergestellten Paste betrug 48,8 Vol.-%. Die Fließkurve entsprach einem nicht idealen plastischen Verhalten, d.h. nach Überschreiten der Fließgrenze stieg die Schergeschwindigkeit im Bereich kleiner Werte zunächst nicht linear mit der Zugspannung an. Aus dem linearen Teil der Fließkurve errechnete sich bis zur Schergeschwindigkeit 130/s eine Fließgrenze von 20 Pa und eine plastische Viskosität von 760 mPa.s. Nach dem Umfüllen der Paste in einen Behälter wurde ein U-förmig gestalteter, stirnseitig offener Lochblechkorb in den Behälter eingesetzt, der durch einen starren Blecharm mit einem oberhalb des Gefäßes angebrachten elektromagnetischen Vibrator verbunden war. Der Lochblechkorb wurde mit 50 Hz und 1 mm Amplitude zum Schwingen gebracht und fluidisierte die Aktivmassenpaste. Eine 1,5 mm dicke Gerüstplatte aus vernickeltem Polypropylenvlies gemäß Beispiel 2 wurde an ihrer Fahne bis zur Oberkante der Platte in die Suspension in den Korb gestellt. Nach 30 Sekunden Verweilzeit in der fluidisierten Paste und Abstreifen des Überschußes ergab die Differenzwägung eine praktisch vollständige Gerüstfüllung.

**Patentansprüche**

1. Verfahren zum Vibrationsfüllen von Schaum- oder Faserstrukturelektrodengerüsten, die mit einer Stromableiterfahne ausgestattet sind, für galvanische Zellen, insbesondere für elektrische Akkumulatoren, mit einer thixotropen Aktivmassenpaste, bei dem das Schaum- oder Faserstrukturelektrodengerüst, an einer Stromableiterfahne hängend, vollständig in einen mit der Aktivmasenpaste gefüllten Behälter eingetaucht und die Aktivmassenpaste in Schwingungen versetzt und dadurch in die Poren des Schaum- bzw. des Faserstrukturelektrodengerüstes eingerüttelt wird,
**dadurch gekennzeichnet,**
daß ein Elektrodengerüst mit einer Porengröße von maximal 100 $\mu$m mit einer Aktivmassenpasten gefüllt wird,
daß diese Aktivmassenpaste einen Aktivmassenanteil von 25 bis 60 Volumenprozent besitzt,
daß die Korngröße der aktiven Partikel in der Aktivmassenpaste maximal 0,04 mm beträgt,
daß die Aktivmassenpaste in nichtvibriertem Zustand eine Fließgrenze von 10 bis 120 Pa und eine plastische Viskosität von 0,1 bis 1 Pas bei 20°C besitzt und
daß der Aktivmassenpaste ein Dispergator aus der Gruppe der wasserlöslichen Salze der Polyphosphorsäure zugesetzt ist.

2. Verfahren nach Anspruch 1,
**dadurch gekennzeichnet,**
daß die Aktivmassenpaste eine plastische Viskosität von 0,15 bis 0,25 Pa.s besitzt.

3. Verfahren nach Anspruch 1 oder 2,
**dadurch gekennzeichnet,**
daß daß die Aktivmassenpaste mittels eines im Behälter parallel zur Elektrodenfläche angeordneten Schwingungsüberträgers oder durch Vibration des Behälters in Schwingungen versetzt wird.

4. Verfahren nach Anspruch 3,
**dadurch gekennzeichnet,**
daß der Schwingungsüberträger oder der Behälter in Schwingungen mit einer Frequenz von 40 bis 125 Hz und einer Amplitude von 0,1 bis 1,5 mm versetzt wird.

5. Verfahren nach Anspruch 1 bis 4,
**dadurch gekennzeichnet,**
daß die Frequenz und die Amplitude der Schwingungen so abgestimmt werden, daß auf der Oberfläche der Aktivmassenpaste sichtbare stehende Wellen erzeugt werden.

6. Verfahren nach Anspruch 3,
**dadurch gekennzeichnet,**
daß als Schwingungsüberträger das Elektrodengerüst oder ein stirnseitig offenes, das Elektrodengerüst vollständig und mindestens seitlich berührungsfrei aufnehmendes U-Profil, verwendet wird.

7. Verfahren nach Anspruch 6,
**dadurch gekennzeichnet,**
daß ein U-Profil aus gelochtem oder geschlitztem Material oder aus Drahtgewebe verwendet wird.

8. Verfahren nach Anspruch 3,
**dadurch gekennzeichnet,**
daß der Schwingungsüberträger die Unterkante des Elektrodengerüstes berührt.

9. Aktivmassenpaste zum Vibrationsfüllen von Schaum- oder Faserstrukturelektrodengerüsten für galvanische Zellen nach Anspruch 1,
**dadurch gekennzeichnet,**
daß der Aktivmassenanteil 25 bis 60 Vol.-% beträgt und die aktiven Partikel eine maximale Korngröße von 0,04 mm aufweisen, sowie in nichtvibriertem Zustand die Aktivmassenpaste eine Fließgrenze von 10 bis 129 Pa und eine plastische Viskosität von 0,1 bis 1 Pa.s bei 20°C besitzt, und die Aktivmassenpaste einen Dispergator aus der Gruppe der wasserlöslichen Salze der Polyphosphorsäure enthält.

10. Aktivmassenpaste nach Anspruch 9,
**dadurch gekennzeichnet,**
daß es sich bei dem Dispergator um ein wasserlösliches Alkalisalz der Polyphosphorsäure handelt.

11. Aktivmassenpaste nach Anspruch 9 oder 10,
**dadurch gekennzeichnet,**
daß sie zusätzlich Kobaltpulver und/oder Kobaltverbindungen aus der Klasse der Oxide, Hydroxide, Bromate oder Phosphate enthält.

12. Aktivmassenpaste nach Anspruch 11,
**dadurch gekennzeichnet,**
daß der Gesamtkobaltgehalt bis 12 Atomprozent, bezogen auf Nickel, in der Paste beträgt.

## Claims

1. Method for the vibration filling of foam-structure or fibre-structure electrode frames, fitted with a current collector lug, for galvanic cells, particularly for electrical accumulators, with a thixotropic paste of active substance, in which the foam-structure or fibre-structure electrode frame, suspended from a current collector lug, is totally immersed in a container filled with the paste of active substance and the paste of active substance is set in vibration and is thus vibrated into the pores of the foam-structure or fibre-structure electrode frame, characterised in that an electrode frame having a pore size of at most 100 $\mu$m is filled with a paste of active substance, that this paste of active substance has an active substance content of 25 to 60 per cent by volume, that the grain size of the active particles in the paste of active substance is at most 0.04 mm, that the paste of active substance has in the unvibrated state a flow limit of 10 to 120 Pa and a plastic viscosity of 0.1 to 1 Pas at 20°C and that a dispersant from the group of water-soluble salts of polyphosphoric acid has been added to the paste of active substance.

2. Method according to Claim 1, characterised in that the paste of active substance has a plastic viscosity of 0.15 to 0.25 Pas.

3. Method according to Claim 1 or 2, characterised in that the paste of active substance is set in vibration by means of a vibration transmitter arranged parallel to the electrode surface in the tank or by vibration of the tank.

4. Method according to Claim 3, characterised in that the vibration transmitter or the tank is set in vibration with a frequency of 40 to 125 Hz and an amplitude of 0.1 to 1.5 mm.

**5.** Method according to Claim 1 to 4, characterised in that the frequency and the amplitude of the vibrations are coordinated so that visible standing waves are generated on the surface of the paste of active substance.

**6.** Method according to Claim 3, characterised in that the electrode frame, or a U-shaped profile open on its end faces and receiving the electrode frame totally and contactlessly at least at the sides is used as vibration transmitter.

**7.** Method according to Claim 6, characterised in that a U-shaped profile made of perforated or slitted material or of wire mesh is used.

**8.** Method according to Claim 3, characterised in that the vibration transmitter touches the bottom edge of the electrode frame.

**9.** Paste of active substance for the vibration filling of foam-structure or fibre-structure electrode frames for galvanic cells according to Claim 1, characterised in that the active substance content is 25 to 60 % by volume and the active particles have a maximum grain size of 0.04 mm and, in the unvibrated state, the paste of active substance has a flow limit of 10 to 129 Pa and a plastic viscosity of 0.1 to 1 Pas at 20 °C, and the paste of active substance contains a dispersant from the group of water-soluble salts of polyphosphoric acid.

**10.** Paste of active substance according to Claim 9, characterised in that the dispersant is a water-soluble alkali metal salt of polyphosphoric acid.

**11.** Paste of active substance according to Claim 9 or 10, characterised in that it additionally contains cobalt powder and/or cobalt compounds from the class of oxides, hydroxides, bromates or phosphates.

**12.** Paste of active substance according to Claim 11, characterised in that the total cobalt content in the paste is up to 12 atom per cent, relative to nickel.

**Revendications**

**1.** Procédé pour remplir au moyen de vibrations des ossatures d'électrodes de structure spongieuse ou fibreuse, qui sont pourvues d'une borne de prise de courant, pour des cellules galvaniques, notamment pour des accumulateurs électriques, au moyen d'une pâte de masse active thixotrope, où l'ossature d'électrode de structure spongieuse ou fibreuse est immergée en étant suspendue à une borne de prise de courant, complètement dans un récipient rempli de la pâte de masse active et la pâte de masse active est mise en vibrations et est ainsi introduite dans les pores de l'ossature d'électrode de structure spongieuse ou fibreuse, procédé caractérisé en ce que :

- une ossature d'électrode ayant une grosseur de pores au maximum de 100 $\mu$m est remplie d'une pâte de masse active,
- cette pâte de masse active contient une proportion de masse active de 25 à 60 pourcent en volume,
- la grosseur de grains des particules actives se trouvant dans la pâte de masse active s'élève au maximum à 0,04 mm,
- la pâte de masse active comporte, dans l'état non en vibration, une limite de fluage de 10 à 120 Pa et une viscosité plastique de 0,1 à 1 Pas à 20 °C et
- on ajoute à la pâte de masse active un agent de dispersion provenant du groupe des sels d'acide polyphosphoriques qui sont solubles dans l'eau.

**2.** Procédé selon la revendication 1, caractérisé en ce que la pâte de masse active a une viscosité plastique de 0,15 à 0,25 Pa.s.

**3.** Procédé selon la revendication 1 ou 2, caractérisé en ce que la pâte de masse active est mise en vibrations au moyen d'un transmetteur de vibrations disposé dans le récipient parallèlement à la surface d'électrode ou bien par vibrations du récipient.

**4.** Procédé selon la revendication 3, caractérisé en ce que le transmetteur de vibrations ou le récipient sont soumis à des vibrations d'une fréquence de 40 à 125 Hz et d'une amplitude de 0,1 à 1,5 mm.

**5.** Procédé selon une des revendications 1 à 4, caractérisé en ce que la fréquence et l'amplitude des vibrations sont réglées de telle sorte que des ondes stationnaires visibles soient produites sur la surface de la pâte de masse active.

**6.** Procédé selon la revendication 3, caractérisé en ce qu'on utilise comme transmetteur de vibrations l'ossature d'électrodes ou bien un profil en U, ouvert sur le côté frontal et recevant l'ossature d'électrodes complètement et de façon exempte de contact au moins latéralement.

**7.** Procédé selon la revendication 6, caractérisé en ce qu'on utilise un profil en U constitué d'une matière perforée ou fendue ou bien d'un tissu en fil.

**8.** Procédé selon la revendication 3, caractérisé en ce que le transmetteur de vibrations est en contact avec le bord inférieur de l'ossature d'électrodes.

**9.** Pâte de masse active pour remplir par vibrations des ossatures d'électrodes de structure spongieuse ou fibreuse pour cellules galvaniques conformément à la revendication 1, caractérisée en ce que la proportion de masse active est comprise entre 25 et 60 % en volume et les particules actives ont une grosseur de grains maximale de 0,04 mm et, dans l'état non soumis à des vibrations, la pâte de masse active a une limite de fluage de 10 à 129 Pa et une viscosité plastique de 0,1 à 1 Pa.s à 20°C, et la pâte de masse active contient un agent de dispersion faisant partie du groupe des sels d'acide polyphosphorique solubles dans l'eau.

**10.** Pâte de masse active selon la revendication 9, caractérisée en ce que l'agent de dispersion est constitué par un sel alcalin d'acide polyphosphorique qui est soluble dans l'eau.

**11.** Pâte de masse active selon une des revendications 9 ou 10, caractérisée en ce qu'elle contient additionnellement de la poudre de cobalt et/ou des composés de cobalt rentrant dans les classes des oxydes, hydroxydes, bromates ou phosphates.

**12.** Pâte de masse active selon la revendication 11, caractérisée en ce que la teneur totale en cobalt de la pâte atteint jusqu'à 12 pourcent atomiques, par rapport au nickel.